# EUROPEAN PATENT APPLICATION

(11) **EP 1 956 393 A2**
(43) Date of publication of application: **13.08.2008**
(21) Application number: 07254705.2
(22) Date of filing: 05.12.2007
(51) Int. Cl.: G01T 1/17

(54) **Method for pole-zero adjustment in radiation measurement systems**

(30) Priority: 21.12.2006 US 876349 P
(71) Applicant: CANBERRA INDUSTRIES, INC., Meriden, CT 06450 (US)
(72) Inventor: Jordanov, Valentin T., Los Alamos, New Mexico 87544 (US)
(74) Representative: Wallin, Nicholas James

(57) **Abstract**

A method for automatic Pole-Zero adjustment in a radiation measurement system, the method including steps of: receiving a plurality of pulses from a radiation detector; for each of the plurality of pulses, synthesizing a multiple-peak pulse shape; and using the amplitude measurement of individual peaks in each of the multiple-peak pulse shapes to adjust the pole-zero of the radiation measurement system.

## Description

### CROSS-REFERENCE TO RELATED APPLICATION

The present application claims the benefit of United States Provisional Application of Serial Number 60/876,349, filed December 21, 2006, and titled METHOD AND APPARATUS FOR AUTOMATIC POLE-ZERO ADJUSTMENT IN RADIATION SPECTROMETERS.

### BACKGROUND OF THE INVENTION

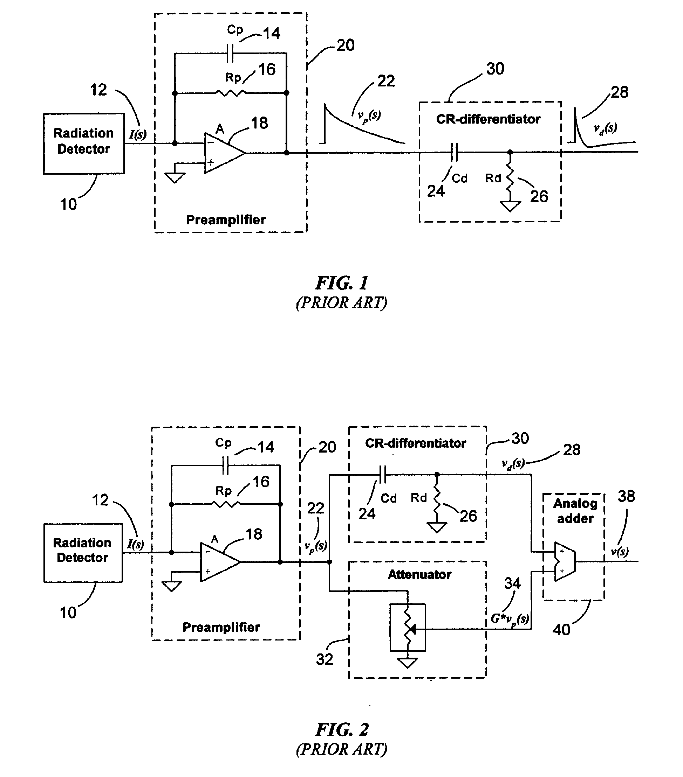

Radiation measurement systems (Radiation Spectrometers) are used to obtain radiation spectra or counting information of radiation (charge particles, photons, neutrons) that interact with a radiation detector. The signal from the radiation detector is a short current pulse that delivers a very small charge. This charge is converted to a voltage pulse using charge-sensitive preamplifier. Preamplifiers that are based on resistive-feedback produce pulses with short rise time and slow exponential decay - an exponential tail pulse. The exponential tail pulse passes through a pulse shaping network that produces short pulses with good signal-to-noise ratio. The first stage of the pulse shaping network performs differentiation in order to produce a pulse with shorter decay time than the pulse from the preamplifier. Fig. 1 shows a typical arrangement to differentiate the signal from the preamplifier.

The radiation detector (10) produces short current pulse *I(s)* (12) that is sensed by the preamplifier (20). The preamplifier has an amplifier (18) and feedback network of resistor (16) with value *Rp* and capacitor (14) with value *Cp.* The output of the preamplifier (20) is an exponential tail pulse *vₚ(s)* (22). The exponential tail pulse (22) pass through an CR differentiator (30) with capacitor (24) and resistor (26) with values *Cd* and *Rd* respectively. The combined response of the preamplifier (20) and the *CR* differentiator (30) then will result in a differentiated pulse *v_{d}(s)* (28) with an undesirable undershoot. The differentiated pulse can be represented as an exponential tail pulse with decay time constant equal to the *Cd*Rd* minus a fraction of the preamplifier exponential tail pulse with decay time constant *Cp*Rp*. In other words, despite of the differentiation the long tail is still present in the differentiated pulse (28).

The undershoot of the differentiated pulse (28) can cause a significant spectral distortion, especially at high counting rates. Therefore, the goal of Pole-Zero Compensation is to remove the undershoot from the differentiated pulse. This goal is easily achieved by adding a fraction of the exponential tail pulse (22) to the differentiated pulse (28). Fig. 2 shows a classic Pole-Zero Compensation circuit using manual adjustment. The attenuator (32) is fed with the same signal as the CR-differentiator - the exponential tail pulse (22). The attenuator (32) is manually adjusted (trim pot, variable resistor) to provide an attenuated tail pulse *G*vₚ(s)* (34). G is the attenuation coefficient and it is bounded between zero and one - 0 < G <1. The differentiated pulse (28) and the attenuated tail pulse (34) are added together by the analog adder (40). The analog addition can be done using passive resistive networks or active, amplifier based, summing circuit. The Pole-Zero exponential pulse *v(s)* (38) is delivered at the output of the analog adder (40). Depending on the value of G there are three possible categories of shapes for the Pole-Zero exponential pulse (38).

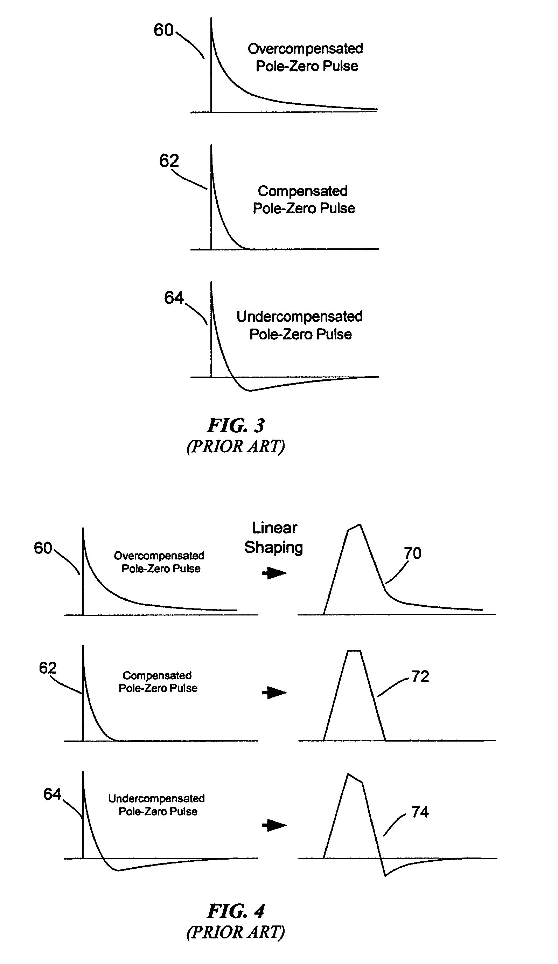

Fig. 3 shows cases of Overcompensated (60), Compensated (62), and Undercompensated (64) Pole-Zero exponential pulses. At the proper setting of G, the attenuated tail pulse (34) will completely compensate for the undershoot of the differentiated pulse (28) ,resulting in single time-constant (*Cd*Rd*) Pole-Zero exponential pulse (Compensated Pole-Zero Pulse). When G is greater than the optimum compensating value, the Pole-Zero exponential pulse will exhibit an overshoot (Overcompensated Pole-Zero Pulse). When G is less than optimum compensating value, the Pole-Zero exponential pulse will exhibit an undershoot (Undercompensated Pole-Zero Pulse).

When the Pole-Zero exponential pulses pass through linear pulse shaper (analog or digital), the overshoot/undershoot features are also present in the resulting shaped pulses. Fig. 4 illustrates shaped pulses resulting from Pole-Zero exponential pulses. An Overcompensated Pole-Zero pulse (60) will cause an Overcompensated Shaped Pulse (70) that will exhibit a longer decaying tail. A Compensated Pole-Zero pulse (62) will cause the fastest recovery to the baseline of the Compensated Shaped Pulse (72). The undershoot of the Undercompensated Pole-Zero pulse (64) will propagate to the Undercompensated Shaped Pulse (74).

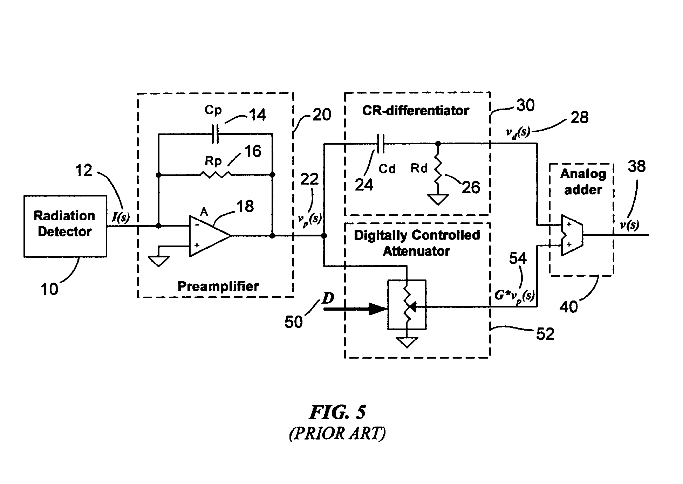

The automatic Pole-Zero compensation uses digitally controlled attenuator (52) as shown in Fig. 5. The attenuation coefficient *G* is proportional to a digital value *D* (50). By changing the digital value (50), one can control the digitally attenuated tail pulse *G*vₚ(s)* (54). The digitally controlled attenuator (52) could be a digitally controlled potentiometer, amplifier with digitally controlled gain or multiplying digital-to-analog converter (MDAC).

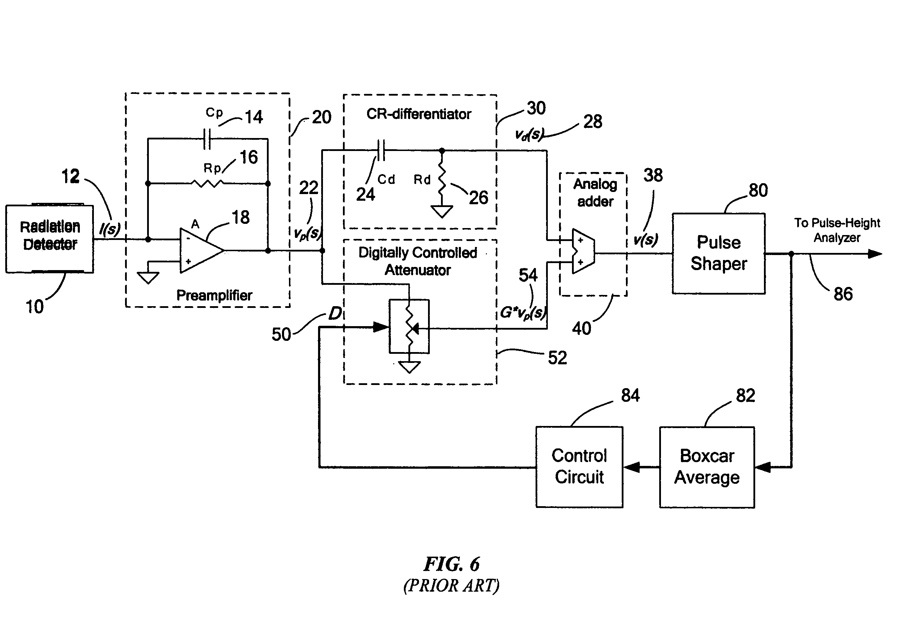

The automatic compensation of the Pole-Zero requires means to determine (estimate) whether the Pole-Zero is properly compensated, overcompensated or undercompensated. Patent 4,866,400 (Fig. 6) uses analog boxcar average (82) connected to the output of pulse shaper (80). A comparator that is a part of the control circuit (84) examines the output of the Boxcar Average (82) and decides in which direction to change the digital value D (50). The condition for overshoot or undershoot is determined by examination of the baseline of pulse shaper (80) after each shaped pulse. Patent 5,872,363 extends the same technique into the digital domain. In both cases, the correct determination of the Pole-Zero state depends on the DC offset of the baseline. The DC offset of the base line causes errors that limit the accuracy of the automatic pole- zero compensation.

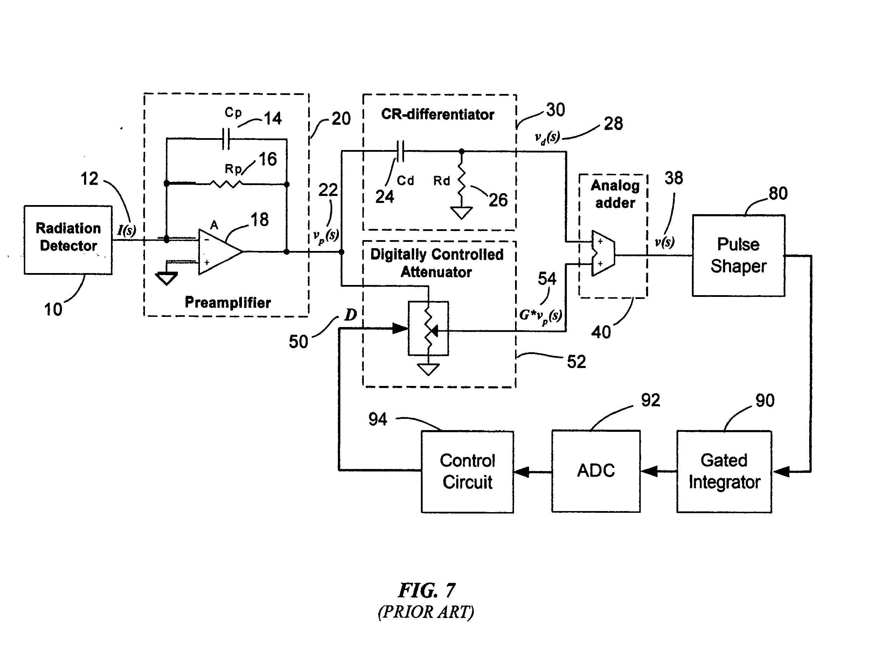

Patent 6,374,192 (Fig. 7) uses a gated integrator (90), operating in the analog domain, to determine the compensation state of the Pole-Zero network. The conditions for overshoot or undershoot is determined by examining the slope of the flat part of the gated integrator pulse. The slope is determined from two amplitude measurements performed by an ADC (92). A Control Circuit (94) increments or decrements the digital value (50) when the slope is negative or positive respectively. As in the previous two cases the accuracy is affected by the DC offset of the baseline of the pulse shaper (80). A DC baseline offset will cause a non Pole-Zero related slope at the output of the gated integrator (90). To eliminate the effects of the baseline DC offset and the detector charge collection time on the automatic Pole-Zero compensation a new method and apparatus were developed.

### BRIEF SUMMARY OF THE INVENTION

A method for automatic Pole-Zero adjustment in a radiation measurement system, said method comprising the steps of: receiving a plurality of pulses from a radiation detector; for each said plurality of pulses, synthesizing a multiple-peak pulse shape; and using amplitude measurement of individual peaks in each said multiple-peak pulse shapes to adjust pole-zero of said radiation measurement system.

### BRIEF DESCRIPTION OF THE DRAWING

Understanding of the present invention will be facilitated by reference to the appended drawing figures, on which elements that have similar features or similar functions are given the same reference numerals throughout the various figures, on which the present invention is not intended to be limited thereto, and on which:
FIG. 1 is a block diagram of the basic elements of Pole-Zero network of a radiation- measurement system in accordance with the prior art.
FIG. 2 is a block diagram of of Pole-Zero adjustment network using an analog attenuator in accordance with the prior art.
\FIG. 3 is an illustration of overcompensated, compensated and undercompensated Pole-Zero Pulses.
FIG. 4 illustrates the effect of Pole-Zero adjustment on pulses obtained with linear pulse-shaping.
FIG. 5 is a block diagram of Pole-Zero adjustment network using a digitally controlled attenuator in accordance with the prior art.
FIG. 6 is a block diagram of automatic Pole-Zero adjustment using boxcar average in accordance with the prior art.
FIG. 7 is a block diagram of automatic Pole-Zero adjustment using gated integrator in accordance with the prior art.
FIG. 8 is a block diagram of automatic Pole-Zero adjustment using multiple-peak pulse shapes in accordance with the invention.
FIG. 9 is an illustration of single-peak pulse shape of the prior art.
FIG. 10 is an illustration of multiple-peak pulse shape of the present invention.
FIG. 11 is and illustration of double-peak pulse shape and the relation of the peak differences to the Pole-Zero adjustment in accordance with the present invention.
FIG. 12 is a flow chart illustrating the steps of automatic Pole-Zero adjustment using successive approximation algorithm in accordance with the present invention.
FIG. 13 is a flow chart illustrating the steps of automatic Pole-Zero adjustment using sequential adjustment algorithm in accordance with the present invention.

### DETAILED DESCRIPTION OF THE PREFERRED MODE OF CARRYING OUT THE PRESENT INVENTION

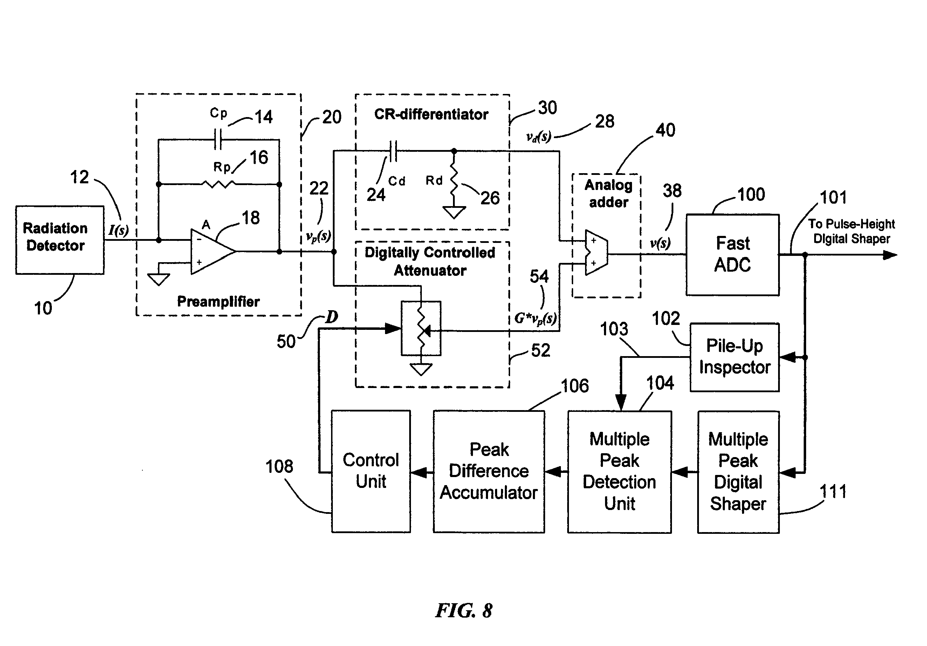

The present invention is based on a new technique to automatically adjust the Pole-Zero of radiation measurement system. The block diagram of the radiation measurement system with the new automatic Pole-Zero adjustment is shown in Fig. 8. The Pole-Zero exponential pulse (38) is digitized continuously by a fast ADC (100). The fast ADC has amplification stage and digitizer that operates at high frequencies, preferably 20MHz to 1GHz. The digitized signal (101) from the fast ADC (100) is fed to pile-up inspector (102) and to multiple-peak digital shaper (111). The pile-up inspector (102) detects pile-up of input pulses within a predetermined time window. If pulse pile-up condition is detected the pile-up inspector generates inhibit signal (103). The multiple-peak detection unit (104) is fed by the multiple-peak digital shaper (111) as well as by the inhibit signal (103). The multiple-peak detection unit (104) detects and measures the amplitudes of all peaks in the pulse shape from the multiple-peak digital shaper (111). If inhibit signal (103) is active, the peak information is discarded. Otherwise, the peak amplitudes are passed to peak difference accumulator (106). The peak difference accumulator (106) finds the differences between the amplitude of the first peak and the amplitudes of all other peaks. The differences are accumulated for predetermined number of pile-up free pulses from the multiple-peak digital shaper (111). Once the predetermined number of pulses is reached, the accumulated sum is passed to control unit (108) which adjusts the digital value (50).

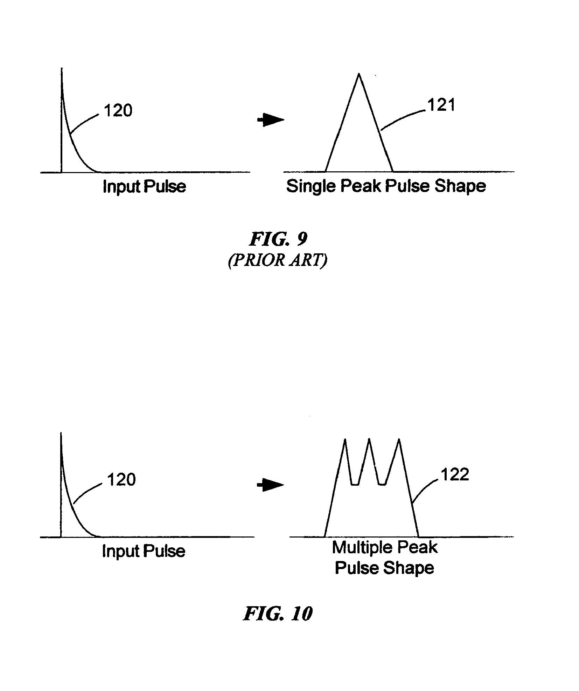

The key of the present invention is the multiple-peak digital shaper (111). Fig. 9 shows traditional pulse shapes used in radiation spectroscopy. The traditional pulse shapers produce pulse shapes with a single peak. That is, a single input pulse (120) will result in single-peak pulse shape (121). These peak shapes offer good noise suppression and high throughputs. However, the peak values by themselves provide little information about the Pole-Zero compensation.

The multiple-peak digital shaper responds to a single detector event by producing a shaped pulse that exhibit more than one peak as shown in Fig. 10. That is, a single input pulse (120) will result in multiple-peak pulse shape (122). In the digital domain, the amplitude and the relation between each of the multiple-peaks is fully predictable and determined. When the Pole-Zero is properly compensated, all peaks in multiple-peak pulse shape will have the same amplitude. In general, there is no restriction for the total number of the peaks in multiple-peak pulse shape, but, for practical purposes and to reduce counting losses due to pile-up pulses, with 2 peaks and not more than 10 peaks are suitable for automatic Pole-Zero compensation. In fact, double peak pulse shape offers the simplest and fastest realization of automatic Pole-Zero compensation. For illustration purpose and clarity we will show examples and will use in the explanation a case with shaped pulse with two peaks, positive amplitude.

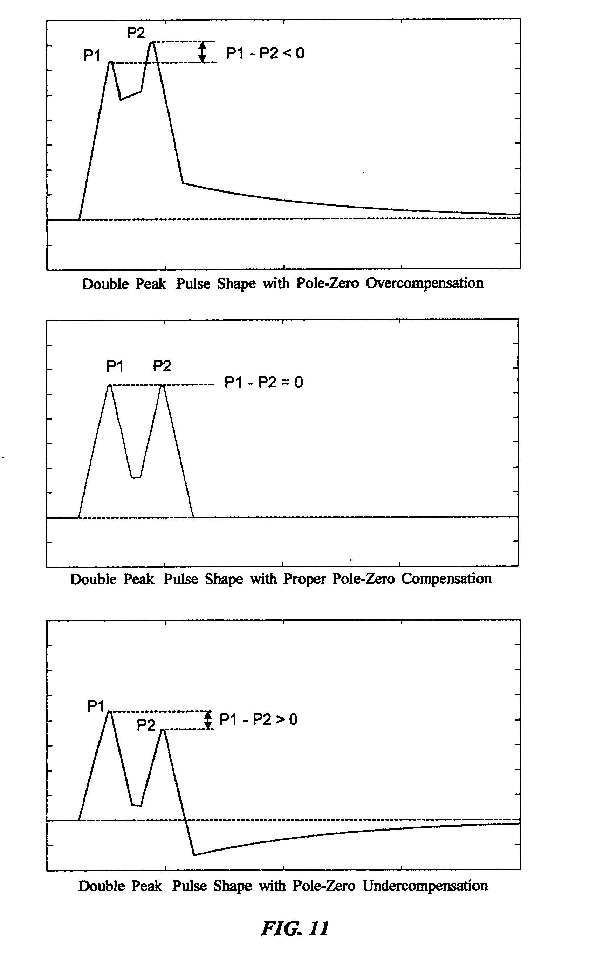

Fig. 11 shows double-peak pulse shape which is digitally shaped. This is a finite impulse response shape at proper Pole-Zero compensation. That is, there is no other tailing besides the tailing from Pole-Zero when improperly adjusted. When Pole-Zero is overcompensated the second peak *P2* has larger amplitude than the first peak *P1*. The difference between the first peak *P1* and the second peak *P2* is negative. When the Pole-Zero is properly adjusted, the peak difference *P1-P2* is equal to zero. When the Pole-Zero is undercompensated, the *P1-P2* difference is greater than zero. Note that the baseline DC offset is canceled and has no effect on the peak difference *P1-P2.* So, in order to adjust the Pole-Zero automatically, first, the peak differences between the first peak and all others peaks from a single multiple-peak digital shape are obtained. To reduce statistical fluctuations the differences from multiple detector events can be added together (averaged). Once the differences are obtained, the second step is to find the sign of these differences. Third, increase attenuation of the attenuator (decrease G) if the peak differences are negative, decrease attenuation (increase G) if the peak differences are positive. Pole-Zero is properly adjusted if the differences are zero or vary around zero - that is, the peak differences are minimized.

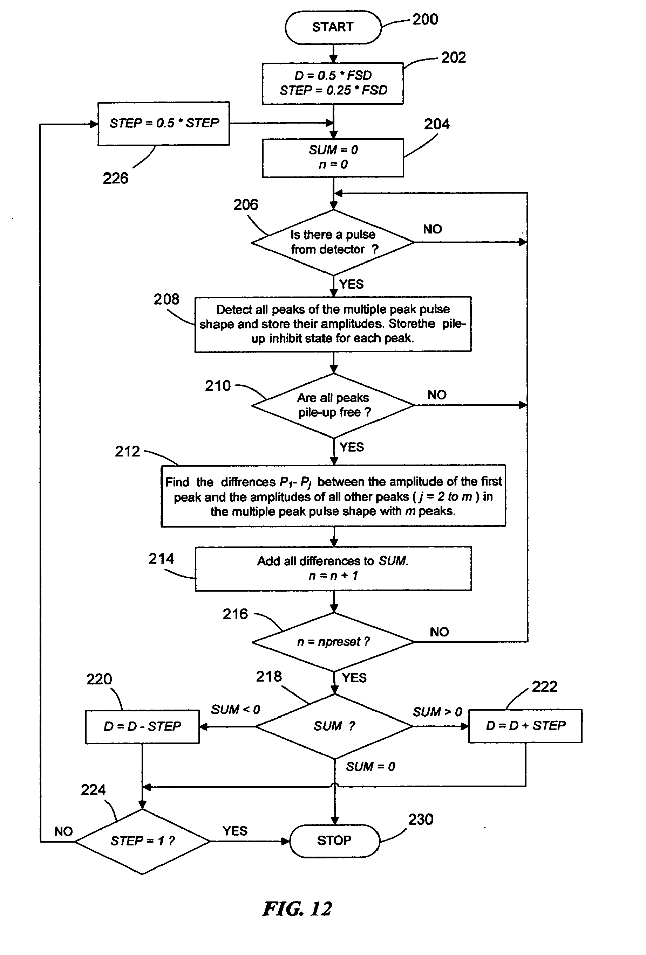

Fig. 12 shows the flowchart of the method to adjust automatically the Pole-Zero using a successive-approximation algorithm. External parameters for the flowcharts are pile-up inhibit flag; the number of all states of the digital value *D* (*FSD*) to control the digitally controlled attenuator (52); preset number of pile-up free pulses *(npreset)* to be added together; *m* - number of peaks in the Multiple-peak Pulse Shape. The value of *npreset* could be 1 to few thousands. For 12 bit MDAC the *FSD* is 4096, while the *D* will be between 0 and 4095.

After the routine starts (step 200) *D* is set to half of the *FSD* (step 202), the parameter *STEP* is set to ¼ of the *FSD.* (step 202) . Next, the *SUM* is reset and the counter *n* of the processed pile-up free pulses is set to zero (step 204). At step 206, the routine is waiting for pulses from the detector. Once a pulse has arrived, all peaks of the multiple-peak pulse are detected and their amplitudes stored (step 208). If a pile-up inhibit flag is active, the peak measurements are discarded (step 210). If all peaks in the Multiple-peak Pulse Shape are free of pile-up, then the differences *P1-Pj* are created, where *P1* is the amplitude of the first peak and *Pj* (*j=2 to m*) are the amplitudes of the rest of the peaks (step 212).

All differences are added to the *SUM* and counter n increments (step 214).. Steps 206 to 216 repeat until counter n becomes equal to *npreset* (step 216). After counter *n* reaches *npreset, SUM* is examined for its sign and zero (step 218). If *SUM* is equal to zero, the automatic Pole-Zero adjustment is completed, routine stops (step 230). If *SUM* is negative, *D* is decreased by *STEP* (step 220), if *SUM* is positive, D is increased by *STEP* (step 222). After *D* is adjusted the routine checks if *STEP* is equal to one (step 224). If true, the automatic Pole-Zero adjustment is completed (step 230). If false, the step is decreased by half (step 226) and routine starts new cycle beginning from step 204.

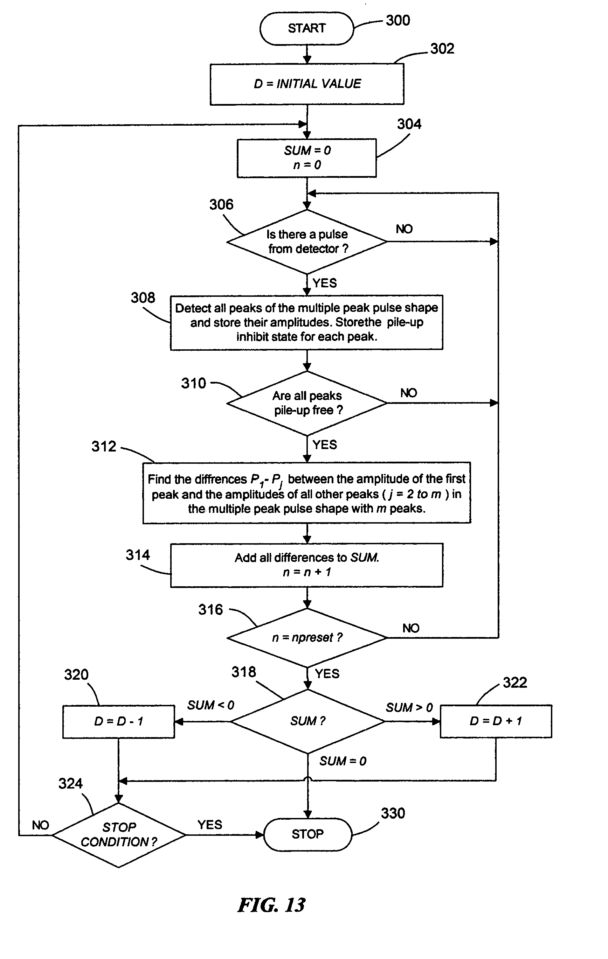

Fig. 13 shows the flowchart of the method when using a step increment of the digital value D. The routine is similar to the routine in Fig. 12. but it is much slower. There is no *STEP* parameter. There is a stop condition which could be the number of alternative increments/decrements of *D,* or when *D* stays within small range for predetermined number of increments/decrements.

The routine in Fig. 13 starts (step 300) and then *D* is set to initial value within the range of *D* (step 302). Next, the *SUM* is reset and the counter *n* of the processed pile-up free pulses is set to zero (step 304). At step 306 the routine is waiting for pulses from the detector. Once a pulse has arrived, all peaks of the multiple-peak pulse are detected and their amplitudes stored (step 308). If a pile-up inhibit flag is active, the peak measurements are discarded (step 310). If all peaks in the Multiple-peak Pulse Shape are free of pile-up, then the differences *P1-Pj* are created, where *P1* is the amplitude of the first peak and *Pj* (*j=2 to m*) are the amplitudes of the rest of the peaks (step 312).

All differences are added to the *SUM* and counter n increments (step 314). Steps 306 to 316 repeat until counter *n* becomes equal to *npreset* (step 316). After counter n reaches *npreset, SUM* is examined for its sign and zero (step 318). If *SUM* is equal to zero, the automatic Pole-Zero adjustment is completed and the routine stops (step 330). If *SUM* is negative, *D* is decreased by one (step 320). If *SUM* is positive, *D* is increased by STEP (step 322). After *D* is adjusted, the routine checks if *STEP* if stop condition is met (step 324). If the stop condition is met, the automatic Pole-Zero adjustment is completed and the routine stops (step 330). If the stop condition is not met, the routine starts a new cycle beginning from step 304.

In the embodiments of the present invention described above, it will be recognized that individual elements and/or features thereof are not necessarily limited to a particular embodiment but, where applicable, are interchangeable and can be used in any selected embodiment even though such may not be specifically shown.

It will thus be seen that the objects set forth above, among those elucidated in, or made apparent from, the preceding description, are efficiently attained and, since certain changes may be made in the above method without departing from the scope of the invention, it is intended that all matter contained in the above description or shown on the accompanying drawing figures shall be interpreted as illustrative only and not in a limiting sense.

It is also to be understood that the following claims are intended to cover all of the generic and specific features of the invention herein described and all statements of the scope of the invention which, as a matter of language, might be said to fall therebetween.

## Claims

1. A method for automatic Pole-Zero adjustment in a radiation measurement system, said method comprising the steps of:
(a) receiving a plurality of pulses from a radiation detector;
(b) for each said plurality of pulses, synthesizing a multiple-peak pulse shape;
(c) using the amplitude measurement of individual peaks in each said multiple-peak pulse shape to adjust pole-zero of said radiation measurement system;

2. A method in accordance with claim 1, further including: a step of detecting and measuring amplitudes of all peaks in said multiple-peak pulse shape.

3. A method in accordance with claim 2, further including: a step of rejecting amplitude measurements of multiple-peak pulse shapes whose peaks are not pile-up free.

4. A method in accordance with claim 3, further including: a step of finding peak differences between amplitude of first peak in said multiple-peak pulse shape and all other peaks in said multiple-peak pulse shapes;

5. A method in accordance with claim 4, further including: a step of obtaining a peak difference sum by adding together peak differences obtained from a plurality of said amplitude measurements of peaks of said multiple-peak pulse shapes;

6. A method in accordance with claim 5, further including: a step of adjusting said pole-zero of said radiation measurement system until peak difference sum is minimized;
